# EUROPEAN PATENT APPLICATION

(11) **EP 4 846 832 A1**
(43) Date of publication of application: **02.12.2026**
(21) Application number: 26174022.9
(22) Date of filing: 22.04.2026
(51) Int. Cl.: A01D 34/00, A01D 34/64, A01D 43/04, A01D 43/08

(54) **MONITORING OF A MOWING PERFORMANCE OF AN AGRICULTURAL MACHINE**

(30) Priority: 28.05.2025 GB 202508278
(71) Applicant: AGCO International GmbH, 8212 Neuhausen am Rheinfall (CH)
(72) Inventor: Hoe, Mads, Randers (DK); HERMANN, Dan, DK-8930 Randers (DK); Boel, Martin, Randers (DK); Duering Jensen, Kenneth, DK-8930 Randers (DK)
(74) Representative: AGCO Intellectual Property Department

(57) **Abstract**

Method and systems are provided for controlling operation of one or more operable components of an agricultural machine (2) operating in a working environment, where the machine comprises a tractor (4) having a mowing unit (6, 8, 10) operably coupled thereto. Sensor data from a sensor arrangement (20) operably mounted to the mowing unit (6, 8, 10) is obtained for a sensing region which encompasses a crop flow associated with the mowing unit (6, 8, 10). Through analysis of the sensor data and identification of crop material components therein, a measure of a mowing performance of the mowing unit can be determined. Operation of one or more components of the agricultural machine (2) are controlled in dependence on the mowing performance.

## Description

### CROSS-REFERENCE TO RELATED APPLICATIONS

### FIELD

Embodiments of the present disclosure relate generally to systems and methods for monitoring a mowing performance of a mowing unit of an agricultural machine.

### BACKGROUND

It is known to mount or otherwise couple implements, and specifically mowing implements to agricultural vehicles such as tractors. Such implements may be front mounted or may be towed by the vehicle. Additionally, some mowing implements are integrated fully with a machine, thereby providing a self-contained and self-propelled mowing apparatus such as a windrower. In either case, there is a need to monitor mowing performance of such mowing implements and units as a measure to monitor crop quality and optionally automate operational adjustments to maximize crop quality and yield.

### BRIEF SUMMARY

In an aspect of the invention there is provided an agricultural machine, comprising: a tractor, a mowing unit operably coupled to the tractor for cutting crop material growing in a working environment; a sensor arrangement operably mounted to the mowing unit and having a sensing region which encompasses a crop flow associated with the mowing unit; and one or more controllers operably configured to: receive sensor data from the sensor arrangement; analyse the sensor data to identify crop material components within the image data; determine for the identified crop material components a measure of a cut quality parameter; determine, in dependence on the cut quality parameter for the identified crop material components, a mowing metric for the mowing unit indicative of a measure of a mowing performance of the mowing unit; and generate and output a control signal for controlling operation of one or more components of the agricultural machine in dependence on the metric.

Advantageously, the present disclosure provides a sensor arrangement on a mowing unit for monitoring a mowing operation performed thereby, specifically relating to a cut or conditioning quality. This may inform an operator of a need to control or adjust control over the cutting / mowing operation to improve cut quality on the go, or the need for maintenance (e.g. replacement of one or more cutting elements of the mowing unit). In turn, this may improve end crop quality thereby increasing yield and productivity for the operator.

The tractor may comprise a single mowing unit operably coupled thereto (e.g. via a hitch point). Alternatively, the tractor may comprise multiple mowing units. The or each mowing unit may comprise a cutting unit.

The sensor unit may be mounted on or otherwise be associated with a cutting system of the mowing unit. This may include mounting on a surface thereof and having a sensing region which encompasses a crop flow post-processing of the crop material by the cutting system, in use. This may include mounting the sensor unit to an underside of the mowing unit proximal to the cutting system.

Where the machine comprises multiple mowing units, the sensor arrangement may comprise multiple sensor units. This may include one (or more) sensor units associated with each mowing unit.

The cutting system may comprise, for example, one or more cutting knives or discs. The cutting system may comprise a cutter bar.

The sensor arrangement may comprise an optical sensor. The optical sensor may comprise a camera, such as a mono camera, for example. This may comprise an RGB camera.

The one or more controllers may be configured to receive optical sensor data from the optical sensor. The one or more controllers may be configured to analyse the optical data for identifying one or more crop components within the optical sensor data. This may include performance of an object recognition process for identifying, e.g. crop components, within the optical sensor data. This may be through the application of an object recognition algorithm, identifying individual crop components based on, e.g. a size, shape or color of objects within the optical sensor data.

The mowing metric may relate to a measure of a uniformity of cut of the identified crop material pieces. This may include determining a cut quality parameter as a measure of a straightness of a cut edge of one or more identified components. This may include determining a measure of a length of cut, or a width of identified crop material components.

The mowing metric may comprise a measure of an average cut quality measure associated with the mowing unit. This may be timewise, for example a moving average to provide a measure of the cutting performance of the mowing unit over time. The average cut quality measure may be determined across the mowing unit, e.g. looking at the transverse distribution of cut quality associated with the mowing unit.

Where the machine comprises multiple mowing units, the one or more controllers may be configured for determining a cut quality parameter for each mowing unit, with the mowing metric being determined for the mowing units individually or across multiple mowing units. The one or more controllers may be configured to compare determined cut quality parameters for two or more mowing units, and determine the mowing metric in dependence thereon. For instance, the one or more controllers may be configured to control operation of the one or more components in dependence on this comparison.

The mowing metric may be compared with a control metric to determine control operations for the one or more components. For example, where the mowing metric quantifies a level of uniformity or straightness of cut for the crop material, the control metric may comprise a threshold uniformity or straightness or an acceptable range outside of which control actions may be taken. For example, where the average uniformity is outside of an acceptable range, a warning may be generated for an operator, e.g. for suggesting one or more maintenance actions to be taken.

The one or more controllable components may comprise a user interface of or otherwise associated with the agricultural machine. This may comprise, for example, a user terminal of the agricultural machine. It may comprise a display screen on a mobile user device associated with the machine. The one or more controllers may be configured for communicating, via the user interface, information relating to the determined mowing metric. This may comprise displaying via the user interface a graphical representation of the determined mowing metric. This may comprise utilising the user interface for providing a recommended control action, e.g. for one or more operable components of the machine, in dependence on the determined mowing metric. For example, in some embodiments the controller(s) may be configured to provide a recommendation for replacing or sharpening of one or more cutting elements of the mowing unit in dependence on the mowing metric. The controller(s) may be configured to provide a recommendation for raising or lowering a height of the mowing unit(s), or for controlling an operational speed or position of one or more components thereof in dependence on the mowing metric. The controller(s) may provide, via the user interface, a recommended forward speed for the agricultural machine. In use, an operator of the agricultural machine may subsequently control operation of the machine through interaction with the user interface, e.g. in accordance with the recommended control action.

The one or more controllable components may comprise the mowing unit(s) and/or operational systems thereof.

For example, the one or more controllable components may comprise an actuator for controlling a cutting height of the mowing unit(s). The actuator may comprise, for example, a linear actuator (e.g. a hydraulic, pneumatic or electric) for controlling an operational position of the mowing unit with respect to a ground surface.

The one or more controllable components may comprise a cutting system of the mowing unit(s). The one or more controllers may be configured to control an operational speed of the cutting system in dependence on the determined mowing metric. Where the cutting system comprises a series of blades or cutting discs, the operational speed may comprise a rotational speed. Where the cutting system comprises a cutter bar, the operational speed may relate to an operational frequency of the cutting system.

The one or more controllers may additionally or alternatively be configured to control an operational position of the mowing unit(s) and/or the cutting system thereof. The one or more controllers may be configured to control a pitch, yaw and/or tilt of the mowing unit or the cutting system with respect to a ground surface and/or the crop. This may be effected through control over one or more actuators, as will be appreciated. The one or more controllers may be configured for adjusting a lateral or vertical position of the cutting system in dependence on the determined mowing metric. This may include increasing or reducing a spacing between the cutting system and a ground surface - i.e. a cutting height for the cutting system - and/or controlling a separation between the cutting system and one or more further operational components of the mowing unit. This may include a distance between the cutting system and a conditioning mechanism, or between the cutting system and a guiding arrangement for controlling the movement and/or placement of cut crop material.

According to a further aspect of the disclosure, there is provided a control system for controlling operation of one or more operable components of an agricultural machine operating in a working environment, the agricultural machine comprising a tractor with a mowing unit operably coupled thereto; and wherein the control system comprises one or more controllers collectively configured to: receive sensor data from a sensor arrangement operably mounted to the mowing unit and having a sensing region which encompasses a crop flow associated with the mowing unit; analyse the sensor data to identify crop material components within the image data; determine for the identified crop material components a measure of a cut quality parameter; determine, in dependence on the cut quality parameter for the identified crop material components, a mowing metric for the mowing unit indicative of a measure of a mowing performance of the mowing unit; and generate and output a control signal for controlling operation of one or more components of the agricultural machine in dependence on the metric.

The one or more controllers may be configured in the same way as the one or more controllers of the agricultural machine of the preceding aspect(s) of the present disclosure.

The one or more controllers may collectively comprise an input (e.g. an electronic input) for receiving one or more input signals. The one or more input signals may comprise the sensor data. The one or more controllers may collectively comprise one or more processors (e.g. electronic processors) operable to execute computer readable instructions for controlling operation of the control system, for example, to identify the crop material components, determine the cut quality parameter and/or the mowing metric. The one or more processors may be operable to generate one or more control signals for controlling operation of the one or more components. The one or more controllers may collectively comprise an output (e.g. an electronic output) for outputting the one or more control signals.

A further aspect provides a method for controlling operation of one or more operable components of an agricultural machine operating in a working environment, the machine comprising a tractor having a mowing unit operably coupled thereto, and the method comprising: receiving sensor data from a sensor arrangement operably mounted to the mowing unit and having a sensing region which encompasses a crop flow associated with the mowing unit; analysing the sensor data to identify crop material components within the image data; determining for the identified crop material components a measure of a cut quality parameter; determining, in dependence on the cut quality parameter for the identified crop material components, a mowing metric for the mowing unit indicative of a measure of a mowing performance of the mowing unit; and controlling operation of one or more components of the agricultural machine in dependence on the metric.

The method may comprise performance of the operational steps for which the one or more controllers of any of the preceding aspects of the disclosure are configured.

A yet further aspect provides computer software which, when executed by one or more processors, causes performance of the method of the preceding aspect of the disclosure.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified top down view illustrating an agricultural machine embodying aspects of the present disclosure;
FIG. 2 is a simplified side cross-sectional view of a mowing unit forming part of the agricultural machine of FIG. 1; and
FIG. 3 is a schematic view of a control system of the present disclosure.

### DETAILED DESCRIPTION

The figures illustrate embodiments of the present disclosure, which provides an agricultural machine here in the form of a tractor mower combination 2 comprising a tractor 4 which includes multiple mowing units 6, 8, 10 operably mounted thereto. It will be appreciated here that alternative embodiments may include different numbers of mowing units, e.g. a single mowing unit. The mowing units 6, 8, 10 are configured for cutting crop material C growing in a working environment. A sensor arrangement, here comprising a camera 20, is operably mounted to the agricultural machine or one or more components thereof, specifically here an underside of a frame 30 of the mowing unit 8 and having a sensing region which encompasses a ground surface proximal to the machine, here in the region behind a cutting system 38 of the mowing unit 8. Sensor data from the camera 20 is used to determine a measure of a cut quality parameter for identified crop material components in the data. A mowing metric indicative of a measure of a mowing performance of the mowing unit is determined from the cut quality parameter(s), which in turn is used to control operation of one or more components (e.g. a user interface 31 of the tractor 4, or operational components of the mowing units 6, 8, 10, etc.) of the agricultural machine 2 as is discussed in detail herein.

### Agricultural Machine

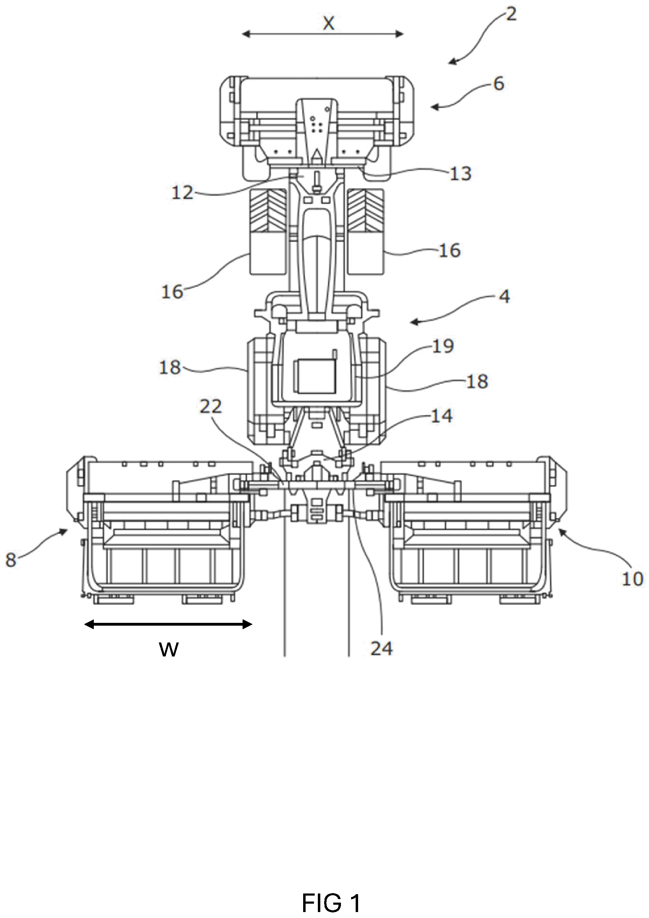

FIG. 1 is a schematic top down view of an agricultural machine 2 in the form of a tractor mower combination formed of a tractor 4, and an implement in the form of a front mowing unit 6. In the illustrated embodiment, tractor 4 comprises front and rear wheels 16, 18, any or all of which may be steerable as will be appreciated, along with an operator cab 19. The machine 2 forms a "butterfly-mower" arrangement which additionally includes first and second rear mowing units 8, 10. The front mowing unit 6 is operably coupled at a front hitch 12 of the tractor 4 and is moveable under the operation of an actuator mechanism 13. The first and second rear mowing units 8, 10 are operably coupled to a rear hitch 14 of the tractor 4 by respective mounting mechanisms 22, 24. The mounting mechanisms 22, 24 may be configured to allow the rear mowing units 8, 10 to be folded between operating (e.g. as shown in FIG 1) and a storage position - e.g. folded upwardly and inwards for transport and/or storage of the machine 2. Mounting mechanisms 22, 24 may additionally be configured for adjusting an operational position of the respective mowing units 8, 10, for example through control over the vertical height, horizontal position and/or pitch, yaw or tilt of the mowing units 8, 10. The mounting mechanisms 22, 24 may comprise suitably configured actuators for this purpose, as will be appreciated. As shown in FIG 1, in an operating position, first and second rear mowing units 8, 10 are positioned such that they are laterally spaced either side of a longitudinal axis of the tractor 4. At least the rear mowing units 8, 10 may be powered by a suitable mechanical coupling with a power take off shaft of the tractor 4 (not shown).

Whilst shown here in a "butterfly mower" arrangement, it will be appreciated that the disclosure is not limited in this sense, and the machine may be formed of a tractor with a single mowing unit, e.g. mowing unit 8, or may be a self-propelled mower / windrower having an integrated mowing unit.

### Mowing Unit

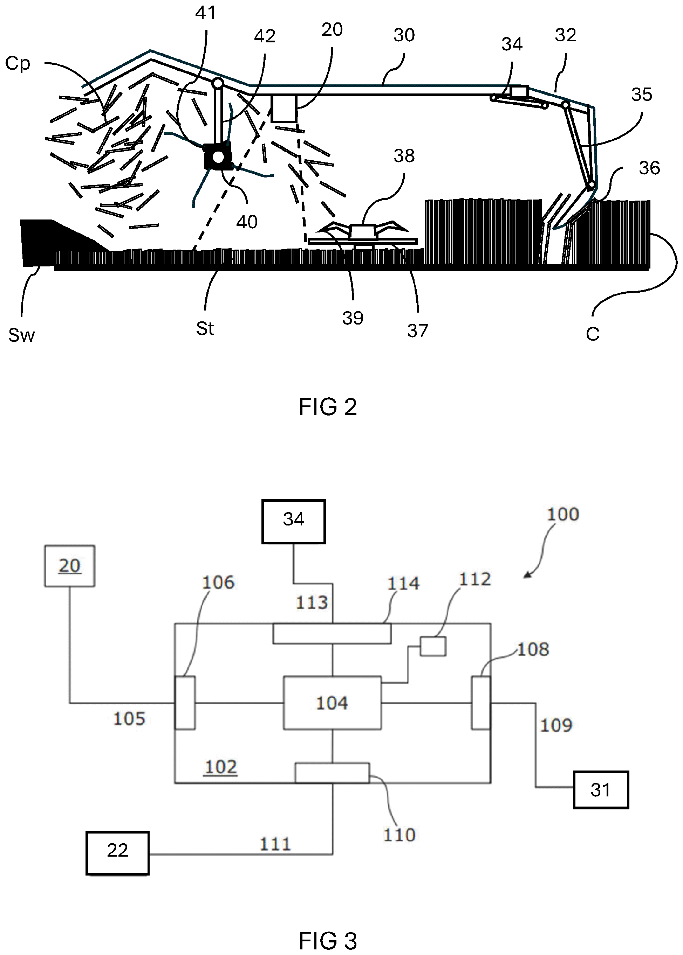

FIG. 2 illustrates an example mowing unit, here mowing unit 8, in more detail. The mowing unit 8 is formed of a frame 30 having a moveable curtain 32 arranged at a foremost section of the mowing unit 8, in a direction of motion, in use. The curtain 32 is moveable in a substantially horizontal direction with respect to the frame 30 under operation of a linear actuator 34 (which could be pneumatic, hydraulic or electric, as desired). The curtain 32 additionally includes and end section 36 connected to and moveable with respect to the remainder of the curtain 32. This movement may be manual, e.g. under impact with other objects such as crop material, but in the illustrated embodiment a further linear actuator 35 is provided for controlling this movement.

The mowing unit 8 additionally includes a cutting system here in the form of a series of rotary cutter discs 38 operably mounted to a cutter bar 37. Only a single cutter disc is displayed here for simplicity, however the skilled reader will understand how a series of cutter discs may be provided across a working width of the mowing unit 8, each of which being rotatable about substantially vertical axes defined by a central hub of the cutter discs 38. Such an arrangement is conventional in the technical field. The cutter discs 38 comprise a series of cutting elements 39 providing a working surface thereof for cutting crop material, in use.

The illustrated mowing unit 8 also incorporates a conditioning unit 40 here formed as a tine conditioner 40 having a rotor supported on the frame 30 of the mowing unit and having a series of tines 41 moveable in a circular path upon rotation of the rotor about a central axis. Again, such an arrangement is common in the field. The conditioning unit 40 of the illustrated embodiment is moveable in a substantially vertical direction under the action of a linear actuator 42. Movement of the conditioning unit 40 under the operation of the actuator 42 is used to adjust a conditioning path for cut crop material Cp between the tines 41 and the frame 30. As will be appreciated, adjustment of this conditioning path may advantageously adjust a level of conditioning applied to the cut crop material Cp, in use.

Cut (and optionally conditioned) crop material may be subsequently formed into a swath Sw left on the ground behind the machine 2, in use. The swath Sw may be collected and/or processed further through performance of one or more agricultural operations, as will be appreciated. The mowing unit 8 may include one or more guiding surfaces downstream of the conditioning unit 40 for controlling the placement of the swath Sw on the ground surface.

The operation of these components of the mowing unit 8 and more widely the agricultural machine 2 can be controlled in dependence on a mowing metric as discussed herein.

The mowing unit 8 is additionally provided with a sensor arrangement here in the form of a camera 20 operably mounted to the frame 30 of the mowing unit. The camera 20 has a sensing region which encompasses a ground surface behind the cutter discs 38 (illustrated by the dotted lines in FIG. 2). In this embodiment, image data from the camera 20 is analysed (see below for a detailed discussion thereof) for determining a measure of a cut quality parameter for crop cut crop material. As discussed herein, this is then used to determine a mowing metric used for control over one or more controllable components of the agricultural machine 2.

### Control System

FIG 3 illustrates the control system 100. As shown, control system 100 comprises a controller 102 having an electronic processor 104, an electronic input 106 and electronic outputs 108, 110, 114. The processor 104 is operable to access a memory 112 of the controller 102 and execute instructions stored therein to perform the steps and functionality of the present disclosure discussed herein, e.g. by determining the cut quality parameter and the mowing metric therefrom, and for controlling operation of the one or more controllable components of the machine 2.

The processor 104 is operable to receive sensor data via input 106 which, in the illustrated embodiment, takes the form of input signals 105 received from the camera 20. As discussed in detail hereinbelow, utilising this data, the processor 104 is configured to analyse the data and determine therefrom a measure of a cut quality parameter for crop material cut by the cutting system of the mowing unit 8. The processor 104 then utilises the cut quality parameter determined from the sensor data to determine a mowing metric indicative of a measure of a mowing performance of the mowing unit 8.

Depending on the determined mowing metric, one or more control actions are determined for operational components of the machine 2, e.g. of the tractor 4 or the mowing unit 8 itself, including the curtain 32, cutting system 38 or the conditioning unit 40.

Specifically, output 108 is operably coupled to a user interface here in the form of a display terminal 31 associated with the tractor 4, e.g. a display terminal provided in an operator cab 19 of the tractor 4. The control system 100 is operable to control or inform operation of the display terminal 31, in the illustrated embodiment through output of control signals 109 via output 108 for receipt at a local control unit of the display terminal 31 for controlling operation thereof for presenting to an operator of the tractor a graphical representation of the mowing metric. The graphical representation may be for information purposes only, and the operator may in turn decide themselves appropriate control actions to be taken in dependence on the information presented by the terminal 31. Alternatively, the display terminal 31 may be utilised to suggest control actions for the operation of the machine 2 based on the determined mowing metric.

In some use cases, e.g. where the mowing metric is indicative of a nonuniformity in cut quality such as frayed ends of cut crop material or a lack of consistency in the length of cut across the crop a recommendation may be determined that an appropriate maintenance action is required, e.g. a replacement of one or more cutting elements of the cutting system. The control system may utilise the display terminal 31 in such use cases for informing the operator of the recommended maintenance action.

FIG 3 additionally illustrates a further feature of embodiments of the control system 100, and a variant of the present disclosure. Specifically, controller 102 includes an electronic output 110 which is operably coupled to the mounting mechanism 22 for controlling an operational position of the mowing unit 8, e.g. via a local control unit for the mounting mechanism 22. The control system 100 is operable to control or inform operation of the mechanism, or one or more actuators thereof, in the illustrated embodiment through output of control signals 111 via output 110 for receipt at a local control unit of the mounting mechanism 22 for controlling operation thereof for raising or lowering the position (i.e. the height) of the mowing unit 8 with respect to the ground surface. Advantageously, the mowing metric may be used to determine whether the mowing unit 8 is cutting at a desired or consistent height for the agricultural operation (e.g. by measuring a cut quality parameter relating to a length of cut material pieces, and potentially a uniformity thereof), and suitable height control for the mowing unit 8 may be automated accordingly. In yet further use cases, a lateral position of the mowing unit 8 may be adjusted, or indeed a pitch, title or roll of the mowing unit 8 may be adjusted, e.g. where the mowing metric is indicative of an uneven mowing performance across a working width W of the mowing unit 8, e.g. where crop material in one region of the sensor data has a different (average) length to crop material in another region.

FIG 3 additionally illustrates yet a further feature of embodiments of the control system 100, and a variant of the present disclosure. Specifically, controller 102 includes an electronic output 114 which is operably coupled to linear actuator 34 for controlling an operational position of the curtain 32 e.g. via a local control unit for the actuator 34. The control system 100 is operable to control or inform operation of the actuator 34 in the illustrated embodiment through output of control signals 113 via output 114 for receipt at a local control unit of the actuator 34 for controlling operation thereof for adjusting a position of the curtain 32 of the mowing unit 8, thereby controlling a separation between the curtain 32 and the cutting system 38. Advantageously, the positioning of the curtain 32 can be adjusted for controlling the interaction between the growing crop C and the cutting system 38. In some instances, for example, for given crop heights it may be more beneficial to increase or reduce the curtain-cutter system separation to ensure an even or uniform "feed" of crop material onto the cutting system 38 and the cutting elements 39 thereof. Rather than measuring crop height directly, a turbulent or non-uniform feed of crop material onto the cutting system 38 may be inferred from a cut quality parameter measured by the camera 20, e.g. through observation of an erratic or inconsistent (average) cut length over time. The present disclosure hereby advantageously provides a system which can automate control over the curtain - cutting system separation to assist an operator.

In an extension, control system 100 may be further configured to control linear actuator 42 for controlling a vertical position of the conditioning unit 40 as discussed herein, e.g. via a local control unit for the actuator 42. The control system 100 is operable to control or inform operation of the actuator 42 for raising or lowering the position of the conditioning unit 40 with respect to the ground surface. In turn, this may adjust the size of a conditioning channel or path as discussed herein, for adjusting a level of conditioning applied to the cut crop material Cp. Advantageously, the mowing metric may indicate an observed size or condition of the cut crop material and in turn a conditioning requirement of that cut crop material Cp. In this way, a level of conditioning applied to the crop material can be controlled in dependence on an observed or determined mowing metric.

In a further extension of the illustrated embodiments, control system 100 may be further configured to control an operational speed of one or more components of the mowing unit 8 in dependence on the determined mowing metric. This can include an operational e.g. rotational, speed of the blades of the cutting system 38. For instance, poor cut quality may be indicative of a too low (or too high) cutting speed of the cutting system 38, which may be controlled accordingly.

The control system 100 may control a rotational speed of the rotor of the conditioning unit 40 in dependence on the mowing metric. As discussed above, the cut quality parameter (and in turn the mowing metric) may be indicative of an expected size or condition of the cut crop material and in turn a conditioning requirement of that cut crop material Cp. In this way, a level of conditioning applied to the crop material can be controlled in dependence on an observed or determined mowing metric by controlling a rotational speed of the conditioning unit 40. As will be appreciated, the operational speed of the components of the mowing unit 8 may be controllable through suitable control over a speed or operation of the power take off shaft of the tractor 4.

In yet a further extension of the illustrated embodiments, the control system 100 may be further configured to control a forward speed of the tractor 4 in dependence on the determined mowing metric. For instance, a poor cut quality may be indicative of a too low (or too high) forward speed of the tractor 4, which may be controlled accordingly.

### Mowing Metric Determination

The process begins with collection and receipt of sensor data by the sensor arrangement. In the illustrated embodiments this comprises the collection of optical sensor data from the camera 20. The optical data is analysed to identify one or more crop material components, specifically here individual crop material components within the optical sensor data through performance of an object recognition process. Once identified, a cut quality parameter is determined for those components, which can include determining a size (e.g. a length) of individual crop material pieces within the optical sensor data (e.g. pixelwise) with respect to a threshold or base measure of a known or expected size or length within the image data. The cut quality parameter can additionally or alternatively include an identification of a uniformity of cut for individual crop material pieces, e.g. looking at the straightness or evenness of the cut ends of the crop material in the image data.

The cut quality parameters for individual crop components are then used to determine a mowing metric for the mowing unit 8. The metric provides an indication of a mowing performance of the mowing unit, and provides a comparable metric for use across multiple points in a working environment, or over time as the machine 2 performs an agricultural operation for automating said process or adjustment of that operation on the go. Where the cut quality parameter relates to component size or length, a corresponding mowing metric may relate to a uniformity or consistency of crop material cut at or around that length. This may be determined across the mowing unit 8, i.e. is the unit 8 cutting consistently across its working width W, and/or over time, e.g. across the working environment as a whole. Where the cut quality parameter relates to a uniformity of the cut of individual pieces, a mowing metric may relate to an absolute number or percentage of identified crop material components having a cut quality falling outside of a control standard or an acceptable cut quality, which may be definable and adjustable by an operator.

### Further Alternative Embodiments

The camera 20 is provided as an example sensor unit, and the skilled person will appreciate that other sensor types may be utilised here. A stereocamera may be advantageously used, with stereo image data providing size or distance information in the sensor data which can be used, e.g. by the controller 102 for determining the cut quality parameter measure. Alternatively, camera 20 may instead comprise a transceiver type sensor with received reflected measurement signals utilised, in use by the controller(s) 102 for determining the cut quality parameter therefrom. Example transceiver type sensors may include RADAR, LIDAR, ultrasonic or time-of-flight sensor, for example.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. An agricultural machine, comprising:
a tractor;
a mowing unit operably coupled to the tractor for cutting crop material growing in a working environment;
a sensor arrangement operably mounted to the mowing unit and having a sensing region which encompasses a crop flow associated with the mowing unit; and
one or more controllers operably configured to:
receive sensor data from the sensor arrangement;
analyse the sensor data to identify crop material components within the image data;
determine for the identified crop material components a measure of a cut quality parameter;
determine, in dependence on the cut quality parameter for the identified crop material components, a mowing metric for the mowing unit indicative of a measure of a mowing performance of the mowing unit; and
generate and output a control signal for controlling operation of one or more components of the agricultural machine in dependence on the metric.

2. An agricultural machine of claim 1, wherein the sensor unit is mounted on or otherwise be associated with the mowing unit having a sensing region which encompasses a crop flow post-processing of the crop material by the mowing unit.

3. An agricultural machine of any preceding claim, wherein the sensor arrangement comprises an optical sensor.

4. An agricultural machine of claim 3, wherein the one or more controllers are configured to:
receive optical sensor data from the optical sensor; and
analyse the optical data for identifying one or more crop components within the optical sensor data through performance of an object recognition process for identifying crop components within the optical sensor data.

5. An agricultural machine of any preceding claim, wherein the one or more controllers are configured to determine a cut quality parameter as a measure of a straightness of a cut edge of one or more identified components and/or as a measure of a length of cut of identified crop material components.

6. An agricultural machine of claim 5, wherein the mowing metric comprises a measure of a uniformity of cut of the identified crop material pieces.

7. An agricultural machine of any preceding claim, wherein the mowing metric comprises a measure of an average cut quality measure associated with the mowing unit; optionally wherein the average cut quality comprises a moving average to provide a measure of the cutting performance of the mowing unit over time, or comprises an average cut quality across the mowing unit looking at the transverse distribution of cut quality associated with the mowing unit.

8. An agricultural machine of any preceding claim, wherein the one or more controllable components comprise a user interface of or otherwise associated with the agricultural machine; and wherein the one or more controllers are configured for displaying, via the user interface, a graphical representation of the determined mowing metric;
wherein the one or more controllers are configured to utilise the user interface for:
providing a recommended control action for one or more operable components of the machine in dependence on the determined mowing metric; and/or
providing a recommendation for replacing or sharpening of one or more cutting elements of the mowing unit in dependence on the mowing metric.

9. An agricultural machine as claimed in any preceding claim, wherein the one or more controllable components comprise the mowing unit(s) and/or operational systems thereof.

10. An agricultural machine of claim 9, wherein the one or more controllable components comprise an actuator for controlling a cutting height of the mowing unit(s).

11. An agricultural machine of claim 9 or claim 10, wherein the one or more controllable components comprise a cutting system for the mowing unit(s); and wherein the one or more controllers are configured to control an operational speed of the cutting system in dependence on the determined mowing metric.

12. An agricultural machine of any of claims 9 to 11, wherein the one or more controllers be configured to control an operational position of the mowing unit(s) and/or the cutting system thereof.

13. An agricultural machine of claim 12, wherein the one or more controllers are configured for controlling a separation between the cutting system and one or more further operational components of the mowing unit in dependence on the determined mowing metric.

14. A control system for controlling operation of one or more operable components of an agricultural machine operating in a working environment, the agricultural machine comprising a tractor with a mowing unit operably coupled thereto; and wherein the control system comprises one or more controllers collectively configured to:
receive sensor data from a sensor arrangement operably mounted to the mowing unit and having a sensing region which encompasses a crop flow associated with the mowing unit;
analyse the sensor data to identify crop material components within the image data; determine for the identified crop material components a measure of a cut quality parameter;
determine, in dependence on the cut quality parameter for the identified crop material components, a mowing metric for the mowing unit indicative of a measure of a mowing performance of the mowing unit; and
generate and output a control signal for controlling operation of one or more components of the agricultural machine in dependence on the metric.

15. A method for controlling operation of one or more operable components of an agricultural machine operating in a working environment, the machine comprising a tractor having a mowing unit operably coupled thereto, and the method comprising:
receiving sensor data from a sensor arrangement operably mounted to the mowing unit and having a sensing region which encompasses a crop flow associated with the mowing unit;
analysing the sensor data to identify crop material components within the image data;
determining for the identified crop material components a measure of a cut quality parameter;
determining, in dependence on the cut quality parameter for the identified crop material components, a mowing metric for the mowing unit indicative of a measure of a mowing performance of the mowing unit; and
controlling operation of one or more components of the agricultural machine in dependence on the metric.
